# EUROPEAN PATENT APPLICATION

(11) **EP 4 539 276 A1**
(43) Date of publication of application: **16.04.2025**
(21) Application number: 23202926.4
(22) Date of filing: 11.10.2023
(51) Int. Cl.: H02B 1/56, H01B 17/54, H01H 9/52, H02G 5/10

(54) **THERMAL BRIDGE BETWEEN HIGH VOLTAGE PARTS AND GROUNDED PARTS OF A MV SWITCH GEAR**

(71) Applicant: ABB SCHWEIZ AG, 5400 Baden (CH)
(72) Inventor: SOLOGUBENKO, Oleksandr, 8906 Bonstetten (CH); SAUER, Manfred, 40885 Ratingen (DE)
(74) Representative: Maiwald GmbH

(57) **Abstract**

The present invention relates to a switchgear (10), comprising:
- a first part (20);
- a second part (30); and
- a thermal bridge (40);
wherein the first part is configured to be held at a high voltage;
wherein the second part is configured to be held at ground potential;
wherein the thermal bridge is in thermal connection with the first part;
wherein the thermal bridge is in thermal connection with the second part;
wherein when the first part is held at the high voltage and the second part is held at ground potential, the thermal bridge is configured to electrically insulate the second part from the first part; and
wherein when the first part is held at the high voltage and the second part is held at ground potential, the thermal bridge is configured to transfer heat from the first part to the second part.

## Description

### FIELD OF THE INVENTION

The present invention relates to a thermal bridge for a switchgear, such as an air-insulated switchgear or a gas-insulated switchgear for medium voltage applications, as well as a switchgear having such a thermal bridge.

### BACKGROUND OF THE INVENTION

Electric switchgears guide electrical currents and therefore generate ohmic losses, resulting in temperature rises. Standards set limits for the permitted temperature rise.

In many applications it is desirable to conduct this heat away from the location of generation to other parts of the switchgear that have lower temperatures. So, it can be avoided to exceed the temperature limits or to increase the current that can be carried with permitted temperature rise. Heat transport away from its origin, e.g. a conductor, works by conduction of heat, by radiation and by convection. For the fixation of conductors, usually insulators or insulating bushings made for example of epoxy are used. However, insulating materials like the widely used epoxy have a low thermal conductivity, and consequently the conduction of thermal energy away from its origin is not effective.

In electric switchgears connections have to be made between parts at high voltage and grounded parts, such as a frame of the switchgear and this has to be achieved with an electrical isolator. However, the heat transfer of these isolator materials is very small. Thus, presently other means have to be provided to cool such high voltage parts of the switchgear, which add cost and complexity.

There is a need to address this issue.

### SUMMARY OF THE INVENTION

Therefore, it would be advantageous to have an improved ability to extract thermal energy from high voltage parts of a switchgear that are at high temperatures.

The object of the present invention is solved with the subject matter of the independent claims, wherein further embodiments are incorporated in the dependent claims.

In a first aspect, there is provided a thermal bridge for a switchgear, the switchgear comprising a first part, and a second part. The first part is configured to be held at a high voltage, and the second part is configured to be held at ground potential. The thermal bridge is configured to be located between the first part and the second part and be in thermal connection with the first part and be in thermal connection with the second part. When the first part is held at the high voltage and the second part is held at ground potential, the thermal bridge is configured to electrically insulate the second part from the first part. When the first part is held at the high voltage and the second part is held at ground potential, the thermal bridge is configured to transfer heat from the first part to the second part.

In an example, the thermal bridge comprises a plastic material.

In an example, the thermal bridge has a thermal conductivity of approximately 8W/mK.

In an example, the thermal bridge comprises LUVOCOM^{®}1800-9333/WT.

In an example, the thermal bridge comprises a ceramic material.

In an example, the thermal bridge has a thermal conductivity of approximately 90W/mK.

In an example, the thermal bridge has a thermal conductivity of approximately 92W/mK.

In an example, the thermal bridge has an insulation of approximately 63 KV/mm

In an example, the thermal bridge comprises ANB-90 from JUCI Technology Co Ltd.

In an example, the thermal bridge comprises Shapal Hi Msoft from Tokuyama corporation.

In an example, the second part comprises a frame of the switchgear, a heat sink, a cooler, a heat pipe or thermo-syphon.

In an example, a connection between the first part and the thermal bridge comprises a welded connection, a soldered connection, a temperature-pressed connection, a screw-pressed connection, a pressed connection.

In an example, a connection between the second part and the thermal bridge comprises a welded connection, a soldered connection, a temperature-pressed connection, a screw-pressed connection, a pressed connection.

In a second aspect, there is provided a switchgear, comprising:
- a first part;
- a second part; and
- a thermal bridge.

The first part is configured to be held at a high voltage. The second part is configured to be held at ground potential. The thermal bridge is in thermal connection with the first part. The thermal bridge is in thermal connection with the second part. When the first part is held at the high voltage and the second part is held at ground potential, the thermal bridge is configured to electrically insulate the second part from the first part. When the first part is held at the high voltage and the second part is held at ground potential, the thermal bridge is configured to transfer heat from the first part to the second part.

In an example, the thermal bridge comprises a plastic material.

In an example, the thermal bridge has a thermal conductivity of approximately 8W/mK.

In an example, the thermal bridge comprises LUVOCOM^{®}1800-9333/WT.

In an example, the thermal bridge comprises a ceramic material.

In an example, the thermal bridge has a thermal conductivity of approximately 90W/mK.

In an example, the thermal bridge has a thermal conductivity of approximately 92W/mK.

In an example, the thermal bridge has a insulation of approximately 63 KV/mm

In an example, the thermal bridge comprises ANB-90 from JUCI Technology Co Ltd.

In an example, the thermal bridge comprises Shapal Hi Msoft from Tokuyama corporation.

In an example, the second part comprises a frame of the switchgear, a heat sink, a cooler, a heat pipe or thermo-syphon.

In an example, the thermal bridge is configured such that a connection between the first part and the thermal bridge comprises a welded connection, a soldered connection, a temperature-pressed connection, a screw-pressed connection, a pressed connection.

In an example, the thermal bridge is configured such that a connection between the second part and the thermal bridge comprises a welded connection, a soldered connection, a temperature-pressed connection, a screw-pressed connection, a pressed connection.

The above aspects and examples will become apparent from and be elucidated with reference to the embodiments described hereinafter.

### BRIEF DESCRIPTION OF THE DRAWINGS

Exemplary embodiments will be described in the following with reference to the following drawing:

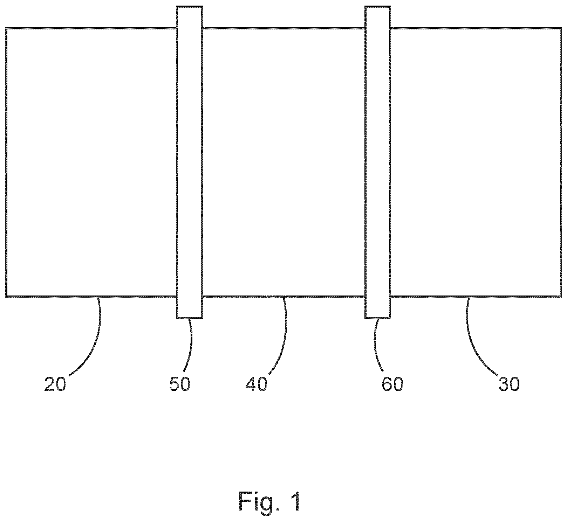

Fig. 1 shows a schematic representation of a high voltage part of a switchgear and a grounded part of the switchgear with a thermal bridge located between them that is electrically isolating the first part from the second part whilst at the same time enabling heat to flow from the first part to the second part.

### DETAILED DESCRIPTION OF EMBODIMENTS

Fig. 1 relates to a thermal bridge for a switchgear, such as an air-insulated switchgear or a gas-insulated switchgear for medium voltage applications, as well as a switchgear having such a thermal bridge.

In an example a switchgear 10 comprises a first part 20, and a second part 30. The first part is configured to be held at a high voltage, and the second part is configured to be held at ground potential. A thermal bridge 40 can then be used in the switchgear to fix the first part to the second part, maintaining electrical isolation between the parts, and at the same time help to cool the first by enabling heat to flow from the hot first part to the cooler second part, where for example the first part could be heated due to Joule heating. The thermal bridge is configured to be located between the first part and the second part and be in thermal connection with the first part and be in thermal connection with the second part. When the first part is held at the high voltage and the second part is held at ground potential, the thermal bridge is configured to electrically insulate the second part from the first part. When the first part is held at the high voltage and the second part is held at ground potential, the thermal bridge is configured to transfer heat from the first part to the second part.

In an example, the thermal bridge comprises a plastic material.

In an example, the thermal bridge has a thermal conductivity of approximately 8W/mK.

In an example, the thermal bridge comprises LUVOCOM^{®}1800-9333/WT.

In an example, the thermal bridge comprises a ceramic material.

In an example, the thermal bridge has a thermal conductivity of approximately 90W/mK.

In an example, the thermal bridge has a thermal conductivity of approximately 92W/mK.

Materials with different thermal conductivities can be tried and tested.

In an example, the thermal bridge has an insulation of approximately 63 KV/mm.

Materials with different thermal insulations can be tried and tested.

In an example, the thermal bridge comprises ANB-90 from JUCI Technology Co Ltd.

In an example, the thermal bridge comprises Shapal Hi Msoft from Tokuyama corporation.

In an example, the second part comprises a frame of the switchgear, a heat sink, a cooler, a heat pipe or thermo-syphon.

In an example, a connection 50 between the first part and the thermal bridge comprises a welded connection, a soldered connection, a temperature-pressed connection, a screw-pressed connection, a pressed connection.

In an example, a connection 60 between the second part and the thermal bridge comprises a welded connection, a soldered connection, a temperature-pressed connection, a screw-pressed connection, a pressed connection.

A switchgear can for example be built having a thermal bridge. Thus, such a switchgear comprises a first part, a second part, and a thermal bridge. The first part is configured to be held at a high voltage. The second part is configured to be held at ground potential. The thermal bridge is in thermal connection with the first part. The thermal bridge is in thermal connection with the second part. When the first part is held at the high voltage and the second part is held at ground potential, the thermal bridge is configured to electrically insulate the second part from the first part. When the first part is held at the high voltage and the second part is held at ground potential, the thermal bridge is configured to transfer heat from the first part to the second part. Thus again, the thermal bridge is used to help fix the first part with respect to the second part, providing for electrical isolation of the high voltage, but at the same time help to provide cooling of the first part through heat conduction from the first part to the second part via the thermal bridge.

In an example, the thermal bridge comprises a plastic material.

In an example, the thermal bridge has a thermal conductivity of approximately 8W/mK.

In an example, the thermal bridge comprises LUVOCOM^{®}1800-9333/WT.

In an example, the thermal bridge comprises a ceramic material.

In an example, the thermal bridge has a thermal conductivity of approximately 90W/mK.

In an example, the thermal bridge has a insulation of approximately 63 KV/mm

In an example, the thermal bridge comprises ANB-90 from JUCI Technology Co Ltd.

In an example, the second part comprises a frame of the switchgear, a heat sink, a cooler, a heat pipe or thermo-syphon.

In an example, the thermal bridge is configured such that a connection between the first part and the thermal bridge comprises a welded connection, a soldered connection, a temperature-pressed connection, a screw-pressed connection, a pressed connection.

In an example, the thermal bridge is configured such that a connection between the second part and the thermal bridge comprises a welded connection, a soldered connection, a temperature-pressed connection, a screw-pressed connection, a pressed connection.

Thus, the inventors realised that rather than fix high voltage parts to grounded parts of a switchgear via electrical insulators that are also thermal insulators, new materials that are electrical insulators but are thermal conductors can be used to connect the high voltage parts to ground, thereby helping facilitate cooling of the high voltage parts as heat can now flow to the grounded parts.

The grounded parts can be a frame of the switchgear, enabling heat to be passed to the outside environment via convection, conduction and radiation.

Also, the thermal bridge can be used to connect to grounded heat sinks, or coolers, or grounded heat pipes or grounded thermo-syphons that can further aid cooling efficiency. As the thermal link is providing for electrical isolation, but provides for heat flow, the designs of heat pipes or thermo-syphons can be simpler because all parts of the heat pipe or thermo-syphon can be at ground potential and no internal insulating part within the heat pipe or thermo-syphon is required.

### Reference Numerals

10 Switchgear
20 A first part of the switchgear at high voltage and at a high temperature for example due to Joule heating due to current flow through the first part
30 A second part of the switchgear at ground potential.
40 A thermal bridge between the first part and the second part of the switchgear.
50 A connection between the first part of the switchgear and the thermal bridge.
60 A connection between the second part of the switchgear and the thermal bridge.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

## Claims

1. A switchgear (10), comprising:
- a first part (20);
- a second part (30); and
- a thermal bridge (40);
wherein the first part is configured to be held at a high voltage;
wherein the second part is configured to be held at ground potential;
wherein the thermal bridge is in thermal connection with the first part;
wherein the thermal bridge is in thermal connection with the second part;
wherein when the first part is held at the high voltage and the second part is held at ground potential, the thermal bridge is configured to electrically insulate the second part from the first part; and
wherein when the first part is held at the high voltage and the second part is held at ground potential, the thermal bridge is configured to transfer heat from the first part to the second part.

2. Switchgear according to claim 1, wherein the thermal bridge comprises a plastic material.

3. Switchgear according to any of claims 1-2, wherein the thermal bridge has a thermal conductivity of approximately 8W/mK.

4. Switchgear according to any of claims 1-3, wherein the thermal bridge comprises LUVOCOM^{®}1800-9333/WT.

5. Switchgear according to claim 1, wherein the thermal bridge comprises a ceramic material.

6. Switchgear according to any of claims 1 or 5, wherein the thermal bridge has a thermal conductivity of approximately 90-92W/mK.

7. Switchgear according to any of claims 1 or 5-6,
wherein the thermal bridge has a insulation of approximately 63 KV/mm

8. Switchgear according to any of claims 1 or 5-7, wherein the thermal bridge comprises ANB-90 from JUCI Technology Co Ltd; or wherein the thermal bridge comprises Shapal Hi Msoft from Tokuyama corporation.

9. Switchgear according to any of claims 1-8, wherein the second part comprises a frame of the switchgear, a heat sink, a cooler, a heat pipe or thermo-syphon.

10. Switchgear according to any of claims 1-9, wherein a connection (50) between the first part and the thermal bridge comprises a welded connection, a soldered connection, a temperature-pressed connection, a screw-pressed connection, a pressed connection.

11. Switchgear according to any of claims 1-10, wherein a connection (60) between the second part and the thermal bridge comprises a welded connection, a soldered connection, a temperature-pressed connection, a screw-pressed connection, a pressed connection.

12. A thermal bridge (40) for a switchgear (10), the switchgear comprising a first part (20), and a second part (30), wherein the first part is configured to be held at a high voltage, and wherein the second part is configured to be held at ground potential; and
wherein the thermal bridge is configured to be located between the first part and the second part and be in thermal connection with the first part and be in thermal connection with the second part;
wherein when the first part is held at the high voltage and the second part is held at ground potential, the thermal bridge is configured to electrically insulate the second part from the first part; and
wherein when the first part is held at the high voltage and the second part is held at ground potential, the thermal bridge is configured to transfer heat from the first part to the second part.
Thermal bridge according to claim 12, wherein the thermal bridge comprises a plastic material.

13. Thermal bridge according to claim 12, wherein the thermal bridge comprises a ceramic material.
